Europäisches Patentamt

European Patent Office

Office européen des brevets

(11) Numéro de publication : **0 002 399 B2**

(19)

(12) **NOUVEAU FASCICULE DE BREVET EUROPEEN**

(45) Date de publication du nouveau fascicule du brevet : **02.05.91 Bulletin 91/18**

(51) Int. Cl.⁵ : **F16D 55/224, F16D 55/02**

(21) Numéro de dépôt : **78400170.3**

(22) Date de dépôt : **09.11.78**

(54) **Frein à disque.**

(30) Priorité : **29.11.77 FR 7735911**

(43) Date de publication de la demande :
**13.06.79 Bulletin 79/12**

(45) Mention de la délivrance du brevet :
**02.09.81 Bulletin 81/35**

(45) Mention de la décision concernant
l'opposition :
**02.05.91 Bulletin 91/18**

(84) Etats contractants désignés :
**BE DE GB SE**

(56) Documents cités :
**DE-A- 1 475 288**
**DE-A- 1 952 568**
**DE-U- 6 805 501**
**FR-A- 1 390 337**

(56) Documents cités :
**FR-A- 1 508 833**
**FR-A- 2 218 789**
**FR-A- 2 330 916**
**Lockheed, Comprehensive Spare Parts Catalogue, vol. 2, (1948-1962 incl.), 6th ed.,v.d.**
**Automitive Products Company Ltd. pp. 2-5 with Fig. DA and DB**
**Lockheed "Service Manual", 2nd ed., pp. 7-9**

(73) Titulaire : **BENDIX France**
**126, rue de Stalingrad**
**F-93700 Drancy (FR)**

(72) Inventeur : **Carré, Jean-Jacques**
**100 Avenue du Président Wilson**
**F-93100 Montreuil (FR)**

(74) Mandataire : **Lejet, Christian et al**
**BENDIX FRANCE Division Technique Service**
**Brevets Bendix Europe 126 rue de Stalingrad**
**F-93700 Drancy (FR)**

EP 0 002 399 B2

Jouve, 18, rue Saint-Denis, 75001 PARIS

## Description

Frein à disque

L'invention concerne un frein à disque et notamment un frein à disque pour un véhicule automobile.

On classe généralement les freins à disque connus à ce jour en différentes catégories. L'une de ces catégories est constituée par les freins fixes dans lesquels un étrier fixe, surplombant le disque, reçoit en coulissement et en ancrage deux organes de friction disposés en vis-à-vis de chacune des faces du disque et susceptibles d'être amenés en engagement de freinage avec celles-ci par des moteurs de frein associés à l'étrier et agissant directement sur chacun des organes de friction. Une autre catégorie est constituée par les freins à disque à étrier ou à cadre coulissant, dans lesquels un ou plusieurs moteurs de frein agissent directement sur l'un des organes de friction tandis que l'autre organe de friction est sollicité en engagement contre le disque par coulissement de l'étrier ou du cadre par rapport à un organe support fixe. Dans ce second type de frein, on peut encore distinguer selon que les organes de friction sont montés en coulissement et en ancrage sur l'étrier ou le cadre coulissant, ou directement sur l'organe support fixe.

Excepté en ce qui concerne l'organe de friction associé à l'étrier ou au cadre coulissant lorsque cet organe prend ancrage directement sur l'étrier ou sur le cadre, les organes de friction sont toujours montés de façon coulissante par rapport à l'organe supportant le couple de freinage, que celui-ci soit constitué par un étrier fixe, par un étrier ou un cadre coulissant, ou encore par un organe support fixe.

On a proposé dans les demandes de brevet français FR-A-2 218 789, FR-A-2 330 916 et dans le brevet français FR-A-1 390 337 des freins à disque du type comprenant au moins un organe de friction dont les extrémités circonférentielles sont reçues en coulissement et en ancrage sur un organe support de couple, des moyens de commande étant associés à ce dernier pour solliciter l'organe de friction en contact de freinage avec une face correspondante d'un disque de frein, au moins une première des extrémités circonférentielles de l'organe de friction comportant au moins une surface arrondie susceptible de coopérer en coulissement et en ancrage avec une surface arrondie correspondante définie sur l'organe support de couple, l'une desdites surfaces arrondies étant concave et l'autre surface arrondie étant convexe.

Cependant, par suite du fait que les freins à disque sont généralement disposés immédiatement au voisinage des roues des véhicules et qu'aucune protection particulière n'est prévue pour les garantir de la boue ou de l'humidité, il se produit parfois un coincement des organes de friction, en particulier lorsque le véhicule est utilisé dans des conditions particulièrement sévères, conduisant à une corrosion rapide des surfaces arrondies de coulissement due par exemple au sel marin ou au sel mélangé à la neige dans les pays nordiques. Il en résulte soit une usure assymétrique des organes de friction, soit une diminution de l'efficacité du frein.

L'invention vise principalement à éliminer cet inconvénient en obligeant l'organe de friction à se déplacer le long d'une surface en vis-à-vis définie sur l'organe support de couple à chaque fois qu'une mise en oeuvre du frein est effectuée, de façon à éviter la formation de dépôts et à décaper automatiquement les surfaces arrondies en contact de l'organe de friction et de l'organe support de couple.

Dans ce but l'invention propose en frein à disque du type décrit plus haut, dans lequel le rayon de courbure de la surface convexe est inférieur à celui de la surface concave, ledit organe de friction étant reçu avec un jeu circonférentiel prédéterminé dans l'organe support de couple, de sorte que l'organe de friction peut occuper une première et une seconde positions circonférentielles extrêmes correspondant à l'ancrage dudit organe de friction sur l'organe support de couple par sa première extrémité circonférentielle ou par la seconde extrémité circonférentielle respectivement, selon le sens de rotation du disque.

Selon l'invention des moyens élastiques qui engendrent une force définissant une composante circonférentielle et une composante radiale perpendiculaire à cette dernière, dirigée vers l'axe du disque, sont prévus pour solliciter au repos ledit organe de friction en éloignement de la première position circonférentielle extrême et en contact permanent avec la surface arrondie définie sur l'organe support de couple, ce jeu prédéterminé étant apte à permettre un balayage des surfaces arrondies en contact mutuel.

Grâce à une telle caractéristique, à chaque mise en oeuvre du frein lorsque le véhicule se déplace dans le sens correspondant à l'ancrage de l'organe de friction par sa première extrémité circonférentielle, ledit organe se déplace circonférentiellement à l'encontre des moyens élastiques, tout en restant en contact avec la surface arrondie définie sur l'organe support de couple par suite de la composante radiale de la force exercée par ces moyens élastiques. Une portion de chacune des surfaces arrondies définies sur l'organe de friction et sur l'organe support de couple se trouve ainsi balayée lors de chacune des mises en oeuvre du frein, de telle sorte que ces surfaces sont automatiquement décapées et que tout coincement de l'organe de friction est rendu impossible.

Conformément à un autre aspect de l'invention, la seconde extrémité circonférentielle de l'organe de friction coopère également par une surface arrondie avec une surface arrondie correspondante définie sur l'organe support de couple, l'une desdites secondes surfaces arrondies étant concave et l'autre seconde surface arrondie étant convexe et de rayon de courbure inférieur à celui de la seconde surface concave. On décrira maintenant un mode de réalisation particulier de l'invention en se référant aux dessins annexés dans lesquels :

— la figure 1 représente une vue de côté, en coupe partielle selon la ligne 1-1 de la figure 2, d'un frein à disque réalisé conformément à la présente invention ; et

— la figure 2 représente une vue en demi-coupe selon la ligne 2-2 de la figure 1 du frein à disque représenté sur la figure 1.

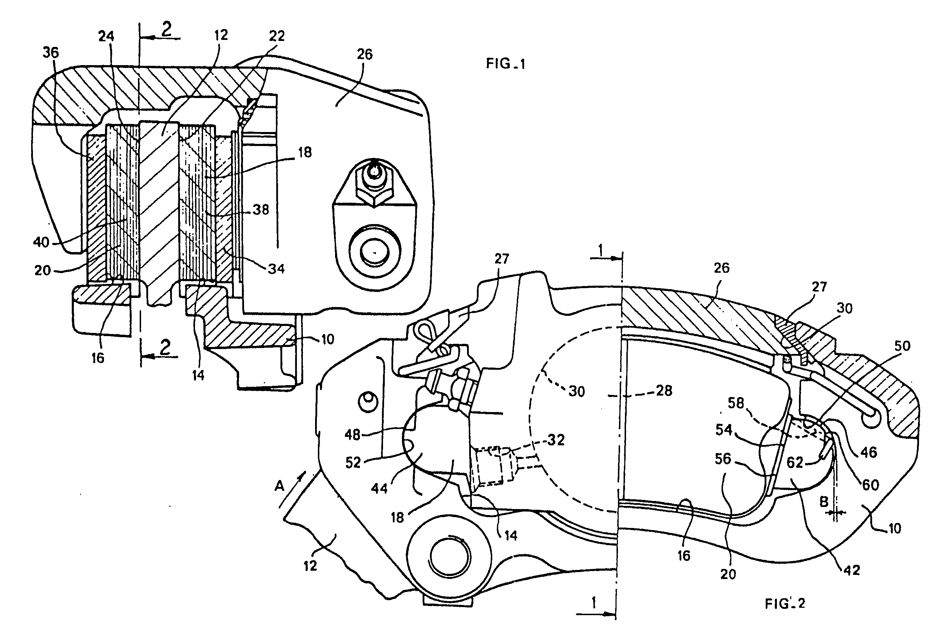

Le frein à disque représenté sur les figures 1 et 2 comprend un organe support fixe 10 prévu pour être associé à une partie fixe du véhicule. L'organe support fixe 10 présente sensiblement la forme d'un U chevauchant un disque 12 prévu pour être associé à une partie tournant avec l'une des roues du véhicule. Ce support fixe 10 définit de part et d'autre du disque 12 des fenêtres 14 et 16 dans lesquelles sont reçus en coulissement et en ancrage deux organes de friction 18 et 20 respectivement disposés en vis-à-vis des faces de friction 22 et 24 du disque 12. Enfin, un étrier 26 est reçu de façon coulissante par l'intermédiaire de clavettes 27 sur les bords circonférentiellement espacés d'une ouverture 30 ménagée dans l'organe support fixe 10 et joignant les fenêtres 14 et 16 au-dessus de la périphérie du disque 12. L'etrier 26 comporte en vis-à-vis de l'organe de friction 18 des moyens de commande constitués dans le mode de réalisation représenté par un moteur hydraulique comprenant un piston 28 reçu dans un alésage 30 et définissant dans celui-ci une chambre à volume variable (non représentée) susceptible d'être reliée par un orifice d'entrée 32 à une source de fluide hydraulique sous pression telle que, par exemple, le maître-cylindre du véhicule.

Chacun des organes de friction 18 et 20 comporte une plaque support de garniture 34, 36 à laquelle est associée par tout moyen approprié tel que, par exemple, par collage ou par rivetage, un bloc de matériau de friction 38, 40 respectivement. Comme le montre en particulier la figure 2, et conformément à l'invention, les extrémitiés circonférentielles avant et arrière 42 et 44 respectivement des organes de friction 18 et 20 définissent des surfaces arrondies 46 et 48 qui coopèrant respectivement avec des surfaces arrondies en vis-à-vis 50 et 52 définies dans les fenêtres 14 et 16 formées dans l'organe support fixe 10, les extrémitiés avant 42, et arrière 44 correspondant respectivement aux extrémitiés par lesquelles les organes de friction 18 et 20 prennent ancrage sur l'organe support fixe 10 lorsque le disque tourne dans le sens correspondant à la marche avant du véhicule indiqué par la flèche A sur la figure 2, et lorsque le disque 12 tourne dans le sens opposé. Les surfaces arrondies 46 et 48 sont des surfaces convexes et les surfaces arrondies en vis-à-vis 50 et 52 sont des surfaces concaves dont le rayon de courbure est supérieur ou égal en tout point à celui des surfaces convexes 46 et 48. Dans le mode de réalisation représenté, le rayon de courbure des surfaces 46 et 48 est sensiblement égal et constant, et le rayon de courbure des surfaces 50 et 52 est sensiblement égal et constant. Comme le montre en particulier la figure 2, les extrémités 42 et 44 des organes de friction 18 et 20 sont constituées par des prolongements dépourvus de matériau de friction des plaques support de garnitures 34 et 36 respectivement, et les surfaces 46 et 48 sont définies sur les bords de ces prolongements.

Conformément à un autre aspect de l'invention, les organes de friction 18 et 20 sont reçus avec un jeu circonférentel prédéterminé B dans l'organe support de couple 10.

Enfin, des moyens élastiques constitués par un ressort en fil métallique 54 sont associés aux organes de friction 18 et 20 de façon à solliciter ces derniers circonférentiellement vers les surfaces concaves 52 définies sur l'organe support fixe 10 et radialement en contact avec la surface 50. Comme le montre en particulier la figure 2, le ressort 54 est associé au prolongement 42 de la plaque support de garniture 34, 36 et comporte un premier bras 56 qui vient en appui sur la face du prolongement 42 portant le bloc de matériau de friction 38, 40 et dont les deux extrémités sont repliées sensiblement à 90° pour venir engager les bords de la plaque support à la base du prolongement 42. Le ressort 54 comporte en outre un second bras 58 qui vient en appui sur l'autre face du prolongement 42 et qui prolonge l'une des extrémités du bras 56. Le bras 58 du ressort 54 s'étend au-delà d'une encoche 60 formée à l'extrémité du prolongement 42 et il est replié sensiblement à angle droit dans ladite encoche pour venir engager la surface concave 50 formée sur l'organe support de couple 10. L'extrémité libre de la partie du ressort 54 qui vient engager la surface concave 50 est repliée elle aussi à angle droit par rapport à cette dernière pour venir en appui à son extrémité 62 sur la face de la plaque support qui porte le bloc de matériau de friction. Le ressort 54 est ainsi associé au prolongement 42 de chacun des organes de friction 18 et 20 et il est précontraint entre ces derniers et les surfaces concaves 50 définies sur l'organe support de couple de telle sorte qu'il génère une force définissant une composante circonférentielle sollicitant la surface 48 formée sur le prolongement arrière 44 contre la surface 52 et une composante perpendiculair à cette composante circonférentielle, dirigée vers l'axe du disque 12, et sollicitant à tout moment la surface convexe 46 définie sur le prolongement avant 42 en contact avec la surface concave 50 définie sur l'organe support fixe 10.

Le frein à disque qui vient d'être décrit en se référant aux figures 1 et 2 fonctionne de la façon suivante:

Lorsque le frein est au repos, les différents éléments qui le constituent occupent les positions représentées sur les figures. En particulier, le ressort 54 sollicite la surface 48 formée sur chacun des organes de friction 18 et 20 en contact avec le fond de la surface 52 en vis-à-vis définie sur l'organe support de couple 10, de sorte qu'un jeu B est défini entre l'extrémité circonférentielle de la surface 46 et le fond de la surface 50. Simultanément le ressort 54 sollicite le prolongement 42 radialement vers le centre du disque 12 de telle sorte que les surfaces 46 et 50 sont en contact dans leur partie inférieure en considérant la figure 2.

Lorsque le conducteur de véhicule actionne la pédale de frein, du fluide hydraulique sous pression est communiqué du maître-cylindre du véhicule (non représenté) à la chambre de commande du moteur de frein par l'orifice d'entrée 32. Le piston 28 est alors sollicité vers la gauche en considérant la figure 1 et il agit directement sur l'organe de friction 18 pour amener celui-ci en engagement de freinage avec la face de friction 22 du disque 12. Par suite de la liaison coulissante existant entre l'étrier 26 et l'organe support de couple 10, l'étrier 26 est sollicité par réaction vers la droite en considérant la figure 1 de sorte que l'organe de friction 20 est amené en engagement de freinage avec la face de friction 24 du disque 12 et qu'une mise en oeuvre du frein est ainsi effectuée. La venue en engagement des blocs de matériau de friction 38 et 40 avec les faces de friction 22 et 24 du disque 12 a pour conséquence, outre de ralentir la rotation de ce dernier, de transmettre à chacun des organes de friction 18 et 20 une force de freinage dirigée vers la droite en considérant la figure 2 lorsque le disque 12 tourne dans le sens correspondant à la marche avant du véhicule désignée par la flèche A. Cette force de freinage s'exerce donc à l'encontre de la composante circonférentielle de la force exercée par les ressorts 54 et tend à combler le jeu B existant entre l'extrémité circonférentielle de la surface 46 et le fond de la surface 50. Au cours du mouvement vers la droite qui en résulte, en considérant la figure 2, la composante radiale de la force exercée par le ressort 54 maintient la surface 46 en contact permanent avec la partie inférieure de la surface 50 en considérant la figure 2. Simultanément, la surface 48 définie sur le prolongement arrière 44 de chacun des organes de friction 18 et 20 est sollicitée en éloignement du fond de la surface 52 définie sur l'organe support de couple 10. Bien que cela ne soit pas le cas dans le mode de réalisation décrit, il va de soi qu'un ressort du type du ressort 54 mais exerçant une force circonférentielle sensiblement inférieure à ce dernier peut être associé au prolongement 44 des organes de friction 18 et 20 de façon à solliciter ce dernier radialement vers le centre du disque 12 afin de maintenir les surfaces 48 et 52 en contact permanent et d'eviter ainsi la production d'un bruit parasite résultant du débattement incontrôlé du prolongement 44 par rapport à la surface 52.

Conformément à l'invention, à chaque mise en oeuvre du frein, correspond un déplacement circonférentiel des organes de friction 18 et 20 qui a pour effet, par suite du contact permanent existant entre les surfaces 46 et 50, de nettoyer ou de décaper ces surfaces. Tout dépôt de boue ou tout début de corrosion ayant par exemple pour origine un arrêt prolongé du véhicule se trouve donc rapidement effacé par le balayage répété des surfaces 46 et 50 et, parallèlement des surfaces 48 et 52, à chaque mise en oeuvre du frein.

Outre l'addition d'un second ressort 54 à l'extrémité arrière de chacun des organes de friction 18 et 20 et la modification possible des rayons de courbure des surfaces arrondies 46. 48, 50 et 52, il va de soi que la présente invention n'est pas limitée au mode de réalisation qui vient d'être décrit à titre d'example.

L'invention peut notamment être utilisée dans tout autre type de frein, et en particulier dans un frein fixe dans lequel les moyens de commande sont associés à l'organe support de couple et agissent directement sur chacun des organes de friction, ainsi que dans un frein du type décrit mais dans lequel les organes de friction prennent ancrage sur l'étrier. De même les surfaces concaves et convexes en vis-à-vis des organes de friction et de l'organe support de couple peuvent être inversées, c'est-à-dire que les surfaces convexes peuvent être formées sur l'organe support de couple, les surfaces concaves étant alors formées sur les organes de friction. On peut également concevoir un frein à disque dans lequel une des extrémités des organes de friction définirait une surface convexe coopérant avec une surface concave formée sur l'organe support de couple, tandis que l'autre extrémité des organes de friction définirait une surface concave coopérant avec une surface convexe définie sur l'organe support de couple. En outre, les rayons de courbure des surfaces concaves et convexes formées sur les organes de friction et sur l'organe support de couple peuvent être variables et différents selon qu'il s'agit de l'extrémité avant ou de l'extrémité arrière des organes de friction. De plus, les moyens élastiques peuvent être associés à l'extrémité arrière des organes de friction de sorte que le déplacement circonférentiel de ces derniers ne se produise que lorsque le véhicule se déplace en marche arrière. Les moyens élastiques peuvent également être conçus de façon à agir symétriquement sur les organes de friction afin de maintenir ces derniers hors de leur positions d'ancrages avant et arrière lorsque le frein n'est pas mis en oeuvre. Le déplacement circonférentiel des organes de friction se produit alors à chaque mise en oeuvre du frein, quel que soit le sens de rotation du disque. Enfin, il va de soi que le ressort qui a été décrit à titre d'exemple peut être modifié sans sortir du cadre de l'invention.

## Revendications

1. Frein à disque pour véhicule, comprenant au moins un organe de friction (18) dont les extrémités circonférentielles (42, 44) sont reçues en coulissement et en ancrage sur un organe support de couple (10), des moyens de commande (28, 30) étant associés à ce dernier pour solliciter l'organe de friction (18) en contact de freinage avec une face correspondante (22) d'un disque de frein (12), au moins une première (42) des extrémités circonférentielles (42, 44) de l'organe de friction (18) comportant au moins une surface arrondie (46) susceptible de coopérer en coulissement et en ancrage avec une surface arrondie (50) correspondante définie sur l'organe support de couple (10), l'une desdites surfaces arrondies (50) étant concave et l'autre surface arrondie (46) étant convexe, le rayon de courbure de la surface convexe (46) étant inférieur à celui de la surface concave (50), ledit organe de friction étant reçu avec un jeu circonférentiel prédéterminé (B) dans l'organe support de couple (10), de sorte que l'organe de friction (18) peut occuper une première et une seconde positions circonférentielles extrêmes correspondant à l'ancrage dudit organe de friction (18) sur l'organe support de couple (10) par sa première extrémité circonférentielle (42) ou par la seconde extrémité circonférentielle (44) respectivement, selon le sens de rotation du disque, caractérisé en ce que des moyens élastiques (54) qui engendrent une force définissant une composante circonférentielle et une composante radiale, perpendiculaire à cette dernière, dirigée vers l'axe du disque (12), sont prévus pour solliciter, au repos, ledit organe de friction (18) en éloignement de la première position circonférentielle extrême et en contact permanent avec la surface arrondie (50) définie sur l'organe support de couple (10), ledit jeu prédéterminé (B) étant apte à permettre un balayage des surfaces arrondies en contact mutuel.

2. frein à disque selon la revendication 1, caractérisé en ce que la seconde extrémité circonférentielle (44) de l'organe de friction coopère également par une surface arrondie (48) avec une surface arrondie (52) correspondante définie sur l'organe support de couple (10), l'une desdites secondes surfaces arrondies (52) étant concave et l'autre seconde surface arrondie (48) étant convexe et de rayon de courbure inférieur à celui de la seconde surface concave (48).

3. Frein à disque selon l'une quelconque des revendications précédentes, caractérisé en ce que la surface concave (50, 52) est formée sur l'organe support de couple (10) et en ce que la surface covexe (46, 48) est formée sur l'organe de friction (18).

4. Frein à disque selon la revendication 3 prise en combinaison avec la revendication 2, dans lequel l'organe de friction (18) comprend une plaque support de garniture (34) à laquelle est associé au moins un bloc de matériau de friction (38), les extrémités circonférentielles (42, 44) de l'organe de friction (18) étant constituées par des prolongements dépourvus de matériau de friction de la plaque support de garniture (34), caractérisé en ce que les surfaces arrondies convexes (46, 48) sont définies sur les bords de ces prolongements (42, 44).

5. Frein à disque selon la revendication 4, caractérisé en ce que les moyens élastiques (54) comprennent au moins un ressort en fil métallique associé au prolongement (42) de l'organe de friction (18) correspondant à la première extrémité circonférentielle et venant en appui sur la surface concave (50) de façon à engendrer ladite force définissant la composante circonférentielle et la composante radiale, perpendiculaire à cette dernière et dirigée vers l'axe du disque (12).

6. Frein à disque selon la revendication 5, caractérisé en ce que le ressort (54) comporte un premier bras (56) en appui sur l'une des faces de la plaque support de garniture (38), et dont les deux extrémités sont repliées à angle droit pour venir engager les bords de ladite plaque (38) à la base du prolongement correspondant (42), l'une desdites extrémités repliées se prolongeant par un second bras (58) venant en appui sur l'autre face de la plaque support (38) et s'étendant au-delà d'une encoche (60) définie dans ledit prolongement (42), l'extrémité libre du second bras (58) étant repliée sensiblement à angle droit dans ladite encoche (60) pour venir engager la surface concave (50) avant définie sur l'organe support de couple (10), et repliée encore à angle droit pour venir en appui sur la première face de la plaque support.

7. Frein à disque selon l'une quelconque des revendications précédentes, caractérisé en ce que lesdites surfaces concaves (50, 52) et convexes (46, 48) définissent deux rayons de courbure sensiblement constants.

## Ansprüche

1. Fahrzeug-Scheibenbremse mit mindestens einer Bremsbacke (18), deren in Umfangsrichtung gesehene Enden (42, 44) gleitend auf einem Stützträger (10) aufgenommen sind, mit einer diesem zugeordneten Betätigungseinrichtung (28, 30), durch welche die Bremsbacke (18) gegen eine zugeordnete Fläche (22) einer Bremsscheibe (12) andrückbar ist, wobei mindestens ein erstes (42) der in Umfangsrichtung gesehenen Enden (42, 44) der Bremsbacke (18) zumindest eine gekrümmte Oberfläche (46) aufweist, welche auf einer entsprechenden gekrümmten Oberfläche (50) des Stützträgers (10) gleitend abgestützt ist, wobei eine der gekrümmten Flächen (50) konkav und die andere (46) konvex ist, wobei der Krümmungsradius der konvexen Oberfläche (46) kleiner als der der konkaven Oberfläche (50) ist, wobei die Bremsbacke unter vorgegebenem Spiel (B) in Umfangsrichtung in dem Stützträger (10) so aufgenommen ist, daß die Bremsbacke (18) in Abhängigkeit von der Drehrichtung der Bremsscheibe (12) eine in Umfangsrichtung gesehene erste Endstellung oder zweite Endstellung einnehmen kann, in der die Bremsbacke (18) über ihr erstes Umfangs-Ende (42) bzw. ihr zweites UmfangsEnde (44) am Stützträger (10) abgestützt ist, dadurch gekennzeichnet, daß elastische Mittel (54) vorgesehen sind, die eine Kraft mit einer Umfangskomponente und einer zu dieser senkrechten, zur Achse der Bremsscheibe (12) gerichteten Radialkomponente erzeugen, um die Bremsbacke (18) in Ruhestellung von der ersten Endstellung weg und in ständige Anlage mit der gekrümmten Oberfläche (50) am Stützträger (10) zu drücken, wobei das vorgegebene Spiel (B) geeignet ist, um ein Abstreifen der gekrümmten, miteinander in Berührung befindlichen Oberflächen zu ermöglichen.

2. Scheibenbremse nach Anspruch 1, dadurch gekennzeichnet, daß der zweite Umfangs-Endabschnitt (44) der Bremsbacken (18, 20) ferner über eine weitere gekrümmte Oberfläche (48) mit einer ebenfalls gekrümmten, zugeordneten Oberfläche (52) des Bremsträgers (10) zusammenarbeitet, wobei von dem zweiten Satz gekrümmter Oberflächen wieder die eine (52) konkav und die andere (48) konvex ist und der Krümmungsradius der konvexen Oberfläche (48) kleiner ist als derjenige der konkaven Oberfläche (52).

3. Scheibenbremse nach Anspruch 1 oder 2, dadurch gekennzeichnet, daß die konkaven Oberflächen (50, 52) auf dem Bremsträger (10) ausgebildet sind und daß die konvexen Oberflächen (46, 48) auf den Bremsbacken (18, 20) vorgesehen sind.

4. Scheibenbremse nach Anspruch 3 in Verbindung mit Anspruch 2, bei welcher die Bremsbacken (18, 20) Trägerplatten (34, 36) aufweisen, die jeweils mit einem Reibbelag(38, 40)versehen sind und bei welcher die Umfangs-Endabschnitte (42, 44) der Bremsbacken (18, 20) durch belagfreie Verlängerungen der Trägerplatten (34, 36) gebildet sind, dadurch gekennzeichnet, daß die konvex gekrümmten Oberflächen (46, 48) an den Rändern der als Trägerplattenverlängerungen ausgebildeten UmfangsEndabschnitte (42, 44) ausgebildet sind.

5. Scheibenbremse nach Anspruch 4, dadurch gekennzeichnet, daß die Feder (54) durch eine Drahtbiegefeder gebildet ist, welche der dem ersten Umfangs-Endabschnitt (42) entsprechenden Verlängerung der Bremsbacken (18, 20) zugeordnet ist und an der konkaven Oberfläche (50) so abgestützt ist, daß sie eine zum zweiten Umfangs-Endabschnitt (44) gerichtete Kraftkomponente und eine zu dieser Umfängs-Kraftkomponente senkrechte radiale Kraftkomponente erzeugt, welche zur Achse der Bremsscheibe (12) hin gerichtet ist.

6. Scheibenbremse nach Anspruch 5, dadurch gekennzeichnet, daß die Feder (54) einen an einer der Seitenflächen der Trägerplatten (34, 36) abgestützten ersten Federarm (56) aufweist, daß ihre beiden Enden rechtwinkelig umgekantet sind, so daß sie die Ränder der Trägerplatten (34, 36) am Fuß der den ersten Umfangs-Endabschnitt (42) bildenden Verlängerung berühren, daß eines dieser umgebogenen Federenden sich in einem zweiten Federarm (58) fortsetzt, der an der anderen Stirnfläche der Trägerplatte (34, 36) abgestützt ist und sich bis über eine Ausnehmung (60) hinauserstreckt, die in der den ersten Umfangs-Endabschnitt (42) darstellenden Verlängerung ausgebildet ist, daß das freie Ende des zweiten Federarmes (58) unter im wesentlichen rechtem Winkel in der Ausnehmung (60) umgebogen ist, so daß er an der auf dem Bremsträger (10) vorgesehenen konkaven Oberfläche (50) angreift, und daß der zweite Federarm (58) noch einmal unter rechtem Winkel umgebogen ist, so daß er auf der ersten Stirnfläche der Bremsträgerplatte (34, 36) abgestützt ist.

7. Scheibenbremse nach einem der Ansprüche 1 bis 6, dadurch gekennzeichnet, daß die konkaven Oberflächen (50, 52) und die konvexen Oberflächen (46, 48) jeweils einen im wesentlichen konstanten Krümmungsradius aufweisen.

## Claims

1. A disc brake for a vehicle, comprising at least one friction member (18) of which the circumferential ends (42, 44) are slidably received and anchored by a torque-absorbing member (10), operating means (28, 30) being associated with the latter to urge the friction member (18) into braking contact with a corresponding side (22) of a disc brake (12), at least a first one (42) of the circumferential ends (42, 44) of the friction member (18) comprising at least one rounded surface (46) slidable on and capable of anchoring on a corresponding rounded surface (50) defined on the torque-absorbing member (10), one of the said rounded surfaces (50) being concave and the other rounded surface (46) being convex, the radius of curvature of the convex surface (46) being smaller than that of the concave surface (50), the said friction member being received with predetermined circumferential clearance (B) in the torque-absorbing member (10), so that the friction member (18) can occupy a first and a second circumferential limit position corresponding to anchoring of the said friction member (18) on the torque-absorbing member (10) by way of its first (42) or second (44) circumferential end respectively, depending on the direction of disc rotation, characterized in that resilient means (54) creating a force defining a circumferential and a radial component, perpendicular to the latter, directed towards the axis of the disc (12), are provided to urge at rest the said friction member (18) away from the first circumferential limit position and into permanent contact with the rounded surface (50) defined on the torque-absorbing member (10), the said predetermined clearance (B) being able to allow a sweeping of the rounded surfaces in mutual contact.

2. A disc brake as claimed in claim 1, characterized in that the second circumferential end (44) of the friction member also cooperates by way of a rounded surface (48) with a corresponding rounded surface (52) defined on the torque-absorbing member (10), one of the said second rounded surfaces (52) being concave and the other second rounded surface (48) being convex and having a smaller radius of curvature than the concave second surface (48).

3. A disc brake as claimed in either of the preceding Claims, characterized in that the concave surface (50, 52) is formed on the torque-absorbing member (10) and in that the convex surface (46, 48) is formed on the friction member (18).

4. A disc brake as claimed in Claims 3 and 2 combined, in which the friction member (18) comprises a backing plate (34) with which at least one pad of friction material (38) is associated, the circumferential ends (42, 44) of the friction member (18) being constituted by extensions of the backing plate (34) which do not bear friction material, characterized in that the convex rounded surfaces (46, 48) are defined on the edges of these extensions (42, 44).

5. A disc brake as claimed in Claim 4, characterized in that the resilient means (54) comprise at least one hire spring associated with the extension (42) of the friction member (18) corresponding to the first circumferential end and capable of bearing on the concave surface (50) so as to generate the said force defining the circumferential component and the radial component, perpendicular to the latter and directed towards the disc (12) axis.

6. A disc brake as claimed in Claim 5, characterized in that the spring (54) comprises a first arm (56) which bears on one side of the backing plate (38) and of which the two ends are bent at right angles to engage the edges of the said plate (38) at the base of the corresponding extension (42), one of the said bent ends being extended by a second arm (58) bearing on the other side of the backing plate (38) and extending beyond a recess (60) in the said extension (42), the free end of the second arm (58) being bent substantially at right angles in the said recess (60) to engage the front concave surface (50) defined on the torque-absorbing member (10) and bent again at right angles to bear on the first side of the backing plate.

7. A disc brake as claimed in any one of the preceding Claims, characterized in that the said concave (50, 52) and convex (46, 48) surfaces define two substantially constant radii of curvature.

FIG.1

FIG.2

8